# EUROPÄISCHE PATENTANMELDUNG

(11) **EP 0 726 545 A2**
(43) Veröffentlichungstag der Anmeldung: **14.08.1996**
(21) Anmeldenummer: 95118513.1
(22) Anmeldetag: 24.11.1995
(51) Int. Cl.: G07F 5/18, G07F 7/02, G06F 17/60

(54) **Kühlschrank**

(30) Priorität: 25.11.1994 IT PS940037 U
(71) Anmelder: Vitri Frigo s.n.c. di Vitri Alceste & C, I-61020 Montecchio di Sant'Angelo in Lizzola (IT)
(72) Erfinder: Casabianca, Roberto, I-61100 Pesaro (IT); Viiri, Alceste, I-61020 Montecchio di Sant'Angelo in Liz (IT)
(74) Vertreter: Gustorf, Gerhard, Dipl.-Ing.

(57) **Zusammenfassung**

Der Kühlschrank oder die Minibar, insbesondere für Hotelzimmer, hat elektronische Sensoren (5) zum Erfassen der Präsenz von Behältern (6) für Getränke o. dgl., die mit einem elektronischen Speicher (9) für die Entnahme verbunden sind, der auch als elektronischer Schlüssel zum Öffnen des Gehäuses (2) des Kühlschranks (1) dient und zur Dekodierung des Verbrauchs abgenommen und an eine zentrale, elektronische Recheneinheit weitergeben werden kann.

## Beschreibung

Die Erfindung betrifft einen Kühlschrank nach dem Oberbegriff des Patentanspruchs 1.

Zimmer in Hotels und Gasthäusern werden sehr häufig mit Kühlschränken für Getränke oder dgl. ausgerüstet. Diese Kühlschränke sind unter der Bezeichnung Minibar bekannt und haben den Zweck, daß der Gast daraus Getränke entnehmen kann, ohne hierzu eine Bedienung zu rufen oder das Zimmer zu verlassen und sich an eine Bar zu begeben. Dieser Kundenservice war vor einiger Zeit noch Merkmal von Luxushotels, hat sich aber seit geraumer Zeit auch auf andere Hotelkategorien ausgebreitet.

Bei der ursprünglichen Organisation dieses Servicekonzeptes wurde, sofern man sich nicht auf die vom Gast bei der Abreise und der Zahlung der Hotelrechnung deklarierten Verbrauchsangaben verlassen wollte, eine Überprüfung des Konsums des Gastes durchgeführt, wozu sich das Hotelpersonal` in das jeweilige Zimmer begeben mußte. Es ist offensichtlich, daß bei diesem Verfahren das Personal in verhältnismäßig großem Umfang zur Verfügung stehen muß und/oder daß dadurch Zwischenfälle und Unannehmlichkeiten verursacht werden können, insbesondere dann, wenn sich mehrere Abreisen zu einer bestimmten Zeit häufen.

Um diesen Kundenservice zu automatisieren, sind mit dem Aufkommen und der Verbreitung der Elektronik Minibars mit Sensoren vorgeschlagen worden, die die Aufgabe haben, die im Inneren des Kühlschranks enthaltenen Getränkebehälter zu erfassen und deren Entnahme zu registrieren; diese Sensoren sind mit einer Zentraleinheit für die Datenerfassung verbunden. Die erläuterte Lösung hat den Nachteil, daß zwischen allen Minibars in den Zimmern und der zentralen Rechenanlage Verbindungskabel notwendig sind, die in der Rechenanlage zusammenlaufen. Bei großen Häusern ist ein derartiges Kabelbündel sehr platzaufwendig und führt zu Problemen im Einsatz. Die bekannte Lösung ist damit nicht nur kompliziert und teuer, auch im Hinblick auf den Einbau und die Wartung, sondern kann im wesentlichen nur in neu zu errichtenden Hotels vorgesehen werden, bei denen hierfür Einrichtungen vorgesehen werden, weil ein nachträglicher Einbau in bereits vorhandene Gebäude erhebliche Kosten und Umbaumaßnahmen, insbesondere im Mauerwerk, erforderlich macht.

Aus diesem Grunde wurde für Einrichtungen in bereits bestehenden Gebäuden eine Lösung gesucht, die vorsieht, daß die Informationsübertragung zur zentralen Rechenanlage über Funkwellen oder Signalwellen durch bereits vorhandene Kabel erfolgt, beispielsweise über Telefonkabel oder Elektroleitungen. Diese Lösung verursacht jedoch erhebliche Probleme, da sie ungenau ist und durch Interferenzen ausfallen kann. Außerdem ergeben sich Schwierigkeiten bei der Herstellung der Kühlschränke in den hierfür vorgesehenen Fabriken, weil die Kühlschränke dort entsprechend angepaßt und ausgerüstet werden müssen, um die bereits vorhandenen Kühlschrankbauarten auf die entsprechenden Anforderungen hin umzurüsten. Nicht zuletzt besteht die Notwendigkeit, den technischen Regeln und Normen in den einzelnen Ländern gerecht zu werden.

Der Erfindung liegt daher die Aufgabe zugrunde, ein wirkungsvolles und funktionssicheres System für die elektronische Registrierung der Entnahme von Getränken oder dgl. aus Kühlschränken, insbesondere Minibars, zur Verfügung zu stellen, bei dem die genannten Nachteile und Grenzen überwunden sind. Die Einrichtung gemäß der Erfindung soll dabei in jeder beliebigen Gebäudestruktur realisiert werden können, ohne daß Umbau- oder Installationsmaßnahmen ergriffen werden müssen. Bei der Einrichtung gemäß der Erfindung soll ferner vermieden werden, daß Interferenzen mit vorhandenen Anlagen des Gebäudes Störungen hervorrufen können. Die Einrichtung gemäß der Erfindung soll nicht zuletzt ohne Schwierigkeiten in ein elektronisches Rechensystem beliebiger Bauart integriert werden können. Ferner soll bei der Erfindung erreicht werden, daß die genannten Aufgaben mit einem möglichst universellen System verwirklicht werden können, das leicht und effizient ausgeführt werden kann, sicher im Betrieb ist und wirtschaftlich arbeitet.

Gemäß der Erfindung werden diese Aufgabe bei einem Kühlschrank, insbesondere für Hotelzimmer, dadurch gelöst, daß in dem Kühlschrank elektronische Sensoren vorhanden sind, welche die Anwesenheit der Getränkebehälter erfassen und mit einem elektronischen Speicher verbunden sind, der auch als elektronischer Schlüssel zum Öffnen des Kühlschrankgehäuses dient und der abgezogen und mitgenommen werden kann, um in der zentralen Rechenanlage eine Dekodierung der Konsumangaben zu ermöglichen.

Weitere Merkmale und Vorteile der Erfindung ergeben sich aus den Ansprüchen und aus der folgenden Beschreibung eines Ausführungsbeispiels, das in der Zeichnung dargestellt ist. Es zeigen:
- Figur 1: eine teilweise geschnittene Ansicht eines Kühlschranks gemäß der Erfindung,

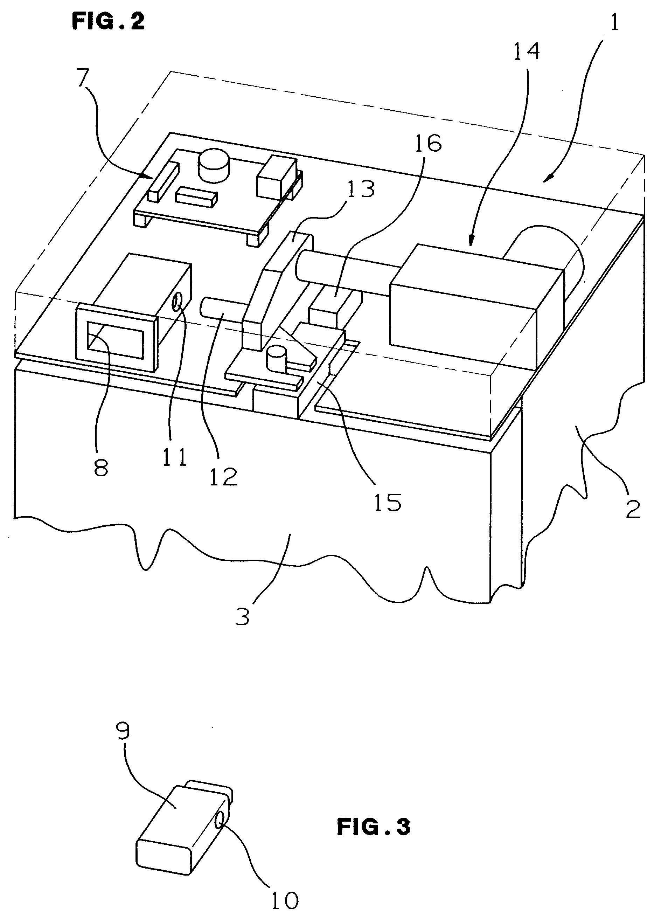

- Figur 2: eine Teilansicht des oberen Bereiches des Kühlschranks im geschlossenen Zustand,

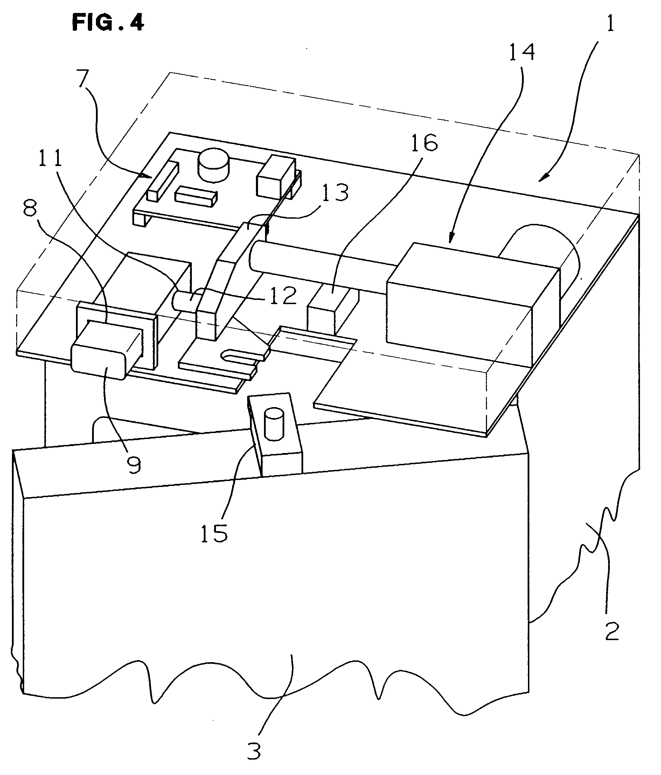

- Figur 3: die schematische Darstellung des elektronischen Schlüssels und
- Figur 4: eine der Figur 2 entsprechende Darstellung des geöffneten Kühlschranks.

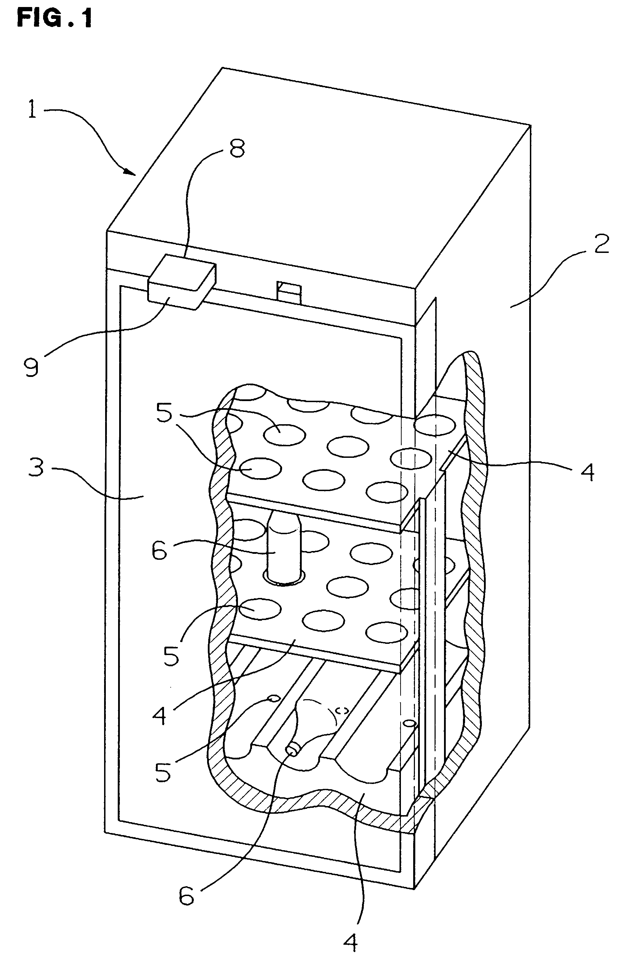

Insbesondere Figur 1 zeigt einen Kühlschrank 1 für Hotelzimmer, der auch als Minibar bezeichnet wird und ein Gehäuse 2 aufweist, das von einer Tür 3 abgeschlossen ist.

In dem Gehäuse 2 sind Fachböden 4 eingebaut, von denen jeder an sich bekannte, elektronische Sensoren 5 aufweist, die beispielsweise visuell erfassen, ob an den entsprechenden Stellen des Fachbodens 4 Behälter 6 für Getränke, Dosen oder Flaschen angeordnet sind. Die Sensoren 5 können hierbei so angeordnet und verteilt sein, daß sie Gruppen von Qualitäten und/oder Preisen zugeordnet sind, die entsprechend kodiert werden. Die Sensoren 5 sind mit einer schematisch dargestellten, elektronischen Schaltungsplatte 7 verbunden, die in an sich bekannter Weise ausgebildet ist und die notwendigen Bauteile aufweist. Diese Schaltungsplatte 7 ist ihrerseits mit einer Steckdose 8 verbunden, die sich über der Tür 3 befindet und zur Aufnahme eines herausnehmbaren Gehäuses 9 dient. Dieses Gehäuse 9 hat einen elektronischen Speicher und wird nachstehend als elektronischer Schlüssel bezeichnet.

Das Gehäuse 9 des elektronischen Schlüssels hat ein seitliches Loch 10, dem im eingesteckten Zustand eine durchgehende Öffnung 11 in der Steckdose 8 entspricht. Wenn das Gehäuse 9 in die Steckdose 8 eingeführt ist, fluchtet das Loch 10 mit der Öffnung 11, so daß ein Stift 12 in beide eingreifen kann, der von einem Schieber 13 eines elektrischen oder elektromagnatischen Schlosses 14 absteht. Das Gegenstück dieses Schlosses 14 ist ein Vorsprung 15 auf der Oberseite der Tür 3. Zu dem Schloß 14 gehört schließlich ein Schalter 16.

Die erläuterte Vorrichtung arbeitet in der folgenden Weise:
Der elektronische Schlüssel 9 ist so ausgebildet, daß er einen elektronischen Code aufnehmen kann, um Zugang zum Kühlschrank 1 zu erreichen. Dieser elektronische Code wird vorzugsweise von der zentralen Recheneinheit eingegeben, die hierzu entsprechend programmiert und ausgerüstet ist. Damit kann jeder Kühlschrank in den einzelnen Zimmern eines Hotels entsprechend verwaltet und gesteuert werden. Der Gast erhält hierfür zusammen mit dem Zimmerschlüssel auch den elektronischen Schlüssel 9 für seinen Kühlschrank 1. Wenn er dann den elektronischen Schlüssel 9 in die Steckdose 8 des Kühlschrankes 1 einführt, folgt daraus ein automatisches Öffnen der Tür 3 durch Übertragung des Öffnungssignals zu dem Schloß 14, dessen Schieber 13 den Vorsprung 15 freigibt, der die Tür 3 in der geschlossenen Stellung gehalten hat. Die geöffnete Stellung der Tür kann zusätzlich visuell angezeigt werden, beispielsweise durch eine grüne LED; in ähnlicher Weise kann auch die geschlossene Stellung angezeigt werden, beispielsweise durch eine rote LED.

Durch die Öffnungsbewegung des Schiebers 13 greift der damit verbundene Stift 12 durch die Öffnung 11 in der Steckdose 8 in das Loch 10 des elektronischen Schlüssels 9, so daß dieser in der Steckdose 8 blockiert wird.

Das Gast hat nun Zugang zu dem Gehäuse 2 des Kühlschranks 1 und kann entsprechend seinen Wünschen die von ihm ausgewählten Behälter 6 von den Fachböden 4 entnehmen. Die Entnahme wird von den Sensoren 5 erfaßt und entsprechend dem jeweiligen Code an den Speicher des elektronischen Schlüssels 9 weitergeleitet. Dies geschieht vorzugsweise erst nach einigen Sekunden, um dem Gast die Möglichkeit zu geben, den oder die Behälter 6 wieder zurückzustellen, sofern er eine andere Wahl treffen möchte oder den betreffenden Behälter 6 lediglich zum näheren Begutachten herausgenommen hatte.

Nach dieser Entnahme wird der Gast die Tür 3 des Kühlschranks 1 wieder schließen. Dabei betätigt der Vorsprung 15 den Schalter 16, der ein Signal an das Schloß 14 weitergibt, so daß dessen Schieber 13 den Vorsprung 15 wieder sperrt, wobei gleichzeitig auch der elektronische Schlüssel 9 freigegeben wird.

Der Gast kann dann den elektronischen Schlüssel 9 am Hotelschalter abgeben, und zwar nach jeder beliebigen Zeitdauer, im allgemeinen dann, wenn er zur Abreise das Hotel wieder verlassen möchte. Der Speicher das elektronischen Schlüssels 9 wird dann von der elektronischen Recheneinheit gelesen, um die gespeicherten Daten zu decodieren und unmittelbar darauf die Hotelrechnung - zusammen mit den anderen Posten für übernachtung und dgl. - auszudrucken. Unmittelbar darauf wird der Speicher in dem elektronischen Schlüssel 9 wieder gelöscht, um diesen einem neuen Gast zur Verfügung zu stellen.

Zum elektromechanischen Schließen des Gehäuses des Kühlschranks 1 können selbstverständlich abgeänderte Maßnahmen getroffen werden, die im Rahmen des Erfindungsgedankens liegen. Nachstehend werden einige mögliche Varianten erläutert.

Die Abmessungen des Kühlschranks und die Zahl und die Anordnung der Fachböden können selbstverständlich von dem dargestellten Ausführungsbeispiel abweichen. Ebenfalls kann die elektronische Ausgestaltung und die Programmierung Varianten erfahren, was im übrigen auch für die Ausbildung und Anordnung der Sensoren gilt. Ferner ist es möglich, Form, Größe und Position der Steckdose und des elektronischen Schlüssels abzuändern. Weiterhin kann die Struktur des Kühlschranks an das Mobiliar des Zimmers angepaßt werden.

Aus der Beschreibung des Ausführungsbeispiels ergeben sich die Vorteile der Erfindung. Diese bestehen in einer wirkungsvollen, funktionalen und wirtschaftlichen Methode zur elektronischen Registrierung bei der Entnahme von Getränken o. dgl. aus einem Kühlschrank, insbesondere einer Minibar. Das System kann in jedem vorhandenen Gebäude eingesetzt werden, ohne daß dort Veränderungen oder Installationen vorgenommen werden müssen. Interferenzen mit bereits vorhandenen elektrischen oder elektronischen Anlagen sind nicht zu befürchten. Für die Kodierung und Auswertung des elektronischen Speichers können bereits vorhandene Rechenanlagen herangezogen werden.

## Patentansprüche

1. Kühlschrank, insbesondere für Hotelzimmer, dadurch gekennzeichnet, daß dieser elektronische Sensoren (5) zum Erfassen der Präsenz von Behältern (6) für Getränke o. dgl. aufweist, die mit einem elektronischen Speicher (9) für die Entnahme verbunden sind, der auch als elektronischer Schlüssel zum Öffnen des Gehäuses (2) des Kühlschranks (1) dient und zur Dekodierung des Verbrauchs abgenommen und an eine zentrale, elektronische Recheneinheit weitergeben werden kann.

2. Kühlschrank nach Anspruch 1, dadurch gekennzeichnet, daß dessen Gehäuse (2) eine Mehrzahl elektronischer Sensoren (5) enthält, die mit einer elektronischen Schaltungsplatte (7) verbunden sind, die entsprechend programmiert und ihrerseits mit einer Steckdose (8) verbunden ist, die zur Aufnahme einer herausnehmbaren Einrichtung (9) dient, welche den elektronischen Speicher enthält, der von der separaten, entsprechend programmierten Recheneinheit decodierbar ist, und welche auch als elektronischer Schlüssel zum Öffnen des Gehäuses (2) dient.

3. Kühlschrank nach Anspruch 2, dadurch gekennzeichnet, daß die herausnehmbare Einrichtung (9) mit dem elektronischen Speicher aus einem Gehäuse (9) besteht, das während des geöffneten Zustandes des Gehäuses (2) in der Steckdose (8) blockiert ist.

4. Kühlschrank nach Anspruch 3, dadurch gekennzeichnet, daß das Gehäuse (9) mit dem elektronischen Speicher ein seitliches Loch (10) aufweist, dem eine Öffnung (11) in der Steckdose (8) entspricht, und daß ein Stift (12) eines Schiebers (13) eines elektrischen oder elektromagnetischen Schlosses (14) durch die Öffnung (11) in das Loch (10) des Gehäuses (9) eingreifen kann, wobei das Schloß (14) zum Sperren und Freigeben eines Vorsprungs (15) dient, der an der Tür (3) des Gehäuses (2) angebracht ist und zum Betätigen eines Schalters (16) dient.

5. Kühlschrank nach einem der vorhergehenden Ansprüche, gekennzeichnet durch eine elektromagnetische Schließeinrichtung für das Gehäuse (2).

6. Kühlschrank nach einem der vorhergehenden Ansprüche, gekennzeichnet durch eine elektronische Schaltung mit entsprechendem Programm für den elektronischen Schlüssel (9).

7. Kühlschrank nach einem der vorhergehenden Ansprüche, dadurch gekennzeichnet, daß die Steckdose (8) und die abnehmbare Einrichtung (9) für den elektronischen Speicher auf der Oberseite des Kühlschranks (1) vorgesehen sind.

8. Kühlschrank nach einem der vorhergehenden Ansprüche, dadurch gekennzeichnet, daß die Fachböden (4) zur Aufnahme der Behälter (6) in geeigneter Anordnung und Zahl vorgesehene Sensoren (5) haben.

9. Kühlschrank nach einem der vorhergehenden Ansprüche, dadurch gekennzeichnet, daß die Fachböden (4) mit den Sensoren (5) auch im Inneren der Tür (3) des Gehäuses (2) angeordnet sind.
